# EUROPÄISCHE PATENTSCHRIFT

(11) **EP 1 849 721 B1**
(45) Veröffentlichungstag und Bekanntmachung des Hinweises auf die Patenterteilung: **10.09.2008**
(21) Anmeldenummer: 07405065.9
(22) Anmeldetag: 01.03.2007
(51) Int. Cl.: B65G 1/137

(54) **Anordnung zum einseitigen Abtrennen von Lagerplätzen in Regallageranlagen, insbesondere Kommissionieranlagen**
Assembly for one-sided separation of storage bays in high bay storage facilities, in particular picking facilities
Agencement destiné à la séparation unilatérale d'aires de stockage dans des installations de stockage à rayonnages, en particulier les installations de préparation

(30) Priorität: 28.04.2006 CH 7052006
(43) Veröffentlichungstag der Anmeldung: 31.10.2007
(73) Patentinhaber: Dreier Solutions GmbH, 4245 Kleinlützel (CH)
(72) Erfinder: Dreier, Erich, 4245 Kleinlützel (CH)
(74) Vertreter: Rottmann, Maximilian

(56) Entgegenhaltungen:
- EP-A2- 1 136 395
- WO-A-03/024845

## Beschreibung

Die Erfindung betrifft eine Anordnung zum einseitigen Abtrennen von Lagerplätzen nach dem Oberbegriff des Anspruchs 1.

Aus der EP-A-1 136 395 ist ein System zum Kommissionieren von in Regallagern befindlichen Artikeln bekannt. Das System umfasst eine Mehrzahl paralleler Regalreihen zum Einlagern von palettierten Artikeln. Zwischen den Regalreihen sind abwechselnd Einlager-Gassen und Pick-Gassen angeordnet. Zwei solcher Regalreihen bilden ein Modul, wobei zwischen den beiden Regalreihen eines Moduls jeweils eine Einlager-Gasse mit mindestens einem Einlager-Fahrzeug angeordnet ist. In jeder Pick-Gasse ist mindestens ein Picker-Fahrzeug zum Picken der zu kommissionierenden Artikel angeordnet. Das Picker Fahrzeug wird von einer Person bedient, welche sich in den Picker Gassen bewegen und die Regalreihen betreten kann. Das jeweilige Einlager-Fahrzeug ist als flurgebundenes Regalbediengerät ausgebildet, während das jeweilige Picker-Fahrzeug auf Schienen verfahrbar ist. In den Regelreihen sind Pufferbahnen ausgebildet, welche die Übergabe einer Palette von der einen Regalreihe in die unmittelbar benachbarte Regalreihe ermöglichen. Um eine Palette von der einen Regalreihe an die benachbarte Regalreihe zu übergeben, muss die Palette von einem Picker-Fahrzeug in eine Pufferbahn eingeschoben werden, wo sie vom Regalbediengerät übernommen und danach in die in der anderen Regalreihe ausgebildete Pufferbahn übergeben wird. Danach kann die Palette von dem gegenüberliegenden Picker-Fahrzeug übernommen werden.

Eine grundsätzliche Problematik bei Regallageranlagen in denen sich Personen aufhalten und bewegen können, insbesondere bei Kommissionieranlagen, in denen sich Personen in den sogenannten Kommissionierebenen frei bewegen können, besteht darin, dass die Personen durch die sich in den der jeweiligen Gasse bewegenden Regalbediengeräte oder deren Lastaufnahmemittel verletzt werden können, wenn sie in den Bereich einer solchen Gasse gelangen. Wenn beispielsweise eine Person einen Lagerplatz betritt, um darin aufgenommene Güter manuell zu entnehmen, so besteht die Gefahr, dass sie mit Körperteilen oder Gliedmassen in die benachbarte Gasse, in der ein Regalbediengerät verfahrbar angeordnet ist, gelangt und dabei von einem sich vorbeibewegenden Regalbediengerät verletzt wird.

Um dies zu verhindern sind Regallageranlagen bekannt, bei denen der jeweilige Lagerplatz auf der der Gasse zugewandten Seite mit einem Hubtor oder einem Schiebetor versehen ist. Diese Tore sind im Normalfall geschlossen, so dass keine Personen durch den jeweiligen Lagerplatz hindurch in den Bereich der Gasse gelangen kann. Bevor jedoch ein Regalbediengerät Paletten in einen Lagerplatz ein- oder auslagern kann, muss zuerst das entsprechende Tor geöffnet und nach dem Einlagern bzw. der Entnahme der Palette auch wieder geschlossen werden. Dieses Öffnen und Schliessen des Tores erfolgt im Allgemeinen durch das Regalbediengerät, welches dazu mit entsprechenden Einrichtungen versehen ist. Es versteht sich, dass das Vorsehen solcher Tore sehr teuer und aufwendig ist und zudem für das Öffnen und Schliessen des jeweiligen Tores vergleichsweise viel Zeit benötigt wird, in der das jeweilige Regalbediengerät blockiert ist.

Die Erfindung zielt darauf ab, eine Anordnung zum einseitigen Abtrennen von Lagerplätzen in Regallageranlagen, insbesondere Kommissionieranlagen, derart weiterzubilden, dass der jeweilige Lagerplatz schnell freigegeben bzw. verschlossen werden kann, dass die Anordnung zuverlässig funktioniert, universell einsetzbar, einfach aufgebaut und kostengünstig herstellbar ist, und eine hohe Sicherheit für die sich in der Anlage bewegenden Personen bietet.

Hierzu wird nach der Erfindung eine Anordnung gemäss dem Anspruch 1 bereitgestellt.

Bevorzugte Ausführungsbeispiele der Anordnung sind in den abhängigen Ansprüchen 2 bis 10 umschrieben.

Im Anspruch 11 wird zudem eine Regallageranlage, insbesondere Kommissionieranlage beansprucht, die mit einer Anordnung zum einseitigen Abtrennen von Lagerplätzen versehen ist. Anspruch 12 beschreibt eine bevorzugte Ausführungsform einer derartigen Regallageranlage.

Nachfolgend wird ein bevorzugtes Ausführungsbeispiel der Erfindung anhand von Zeichnungen näher erläutert. In diesen Zeichnungen zeigt:
- Fig. 1: eine Draufsicht auf eine schematisch dargestellte Kommissionieranlage;
- Fig. 2: zwei schematisch dargestellte Rollschranken;
- Fig. 3: eine Ansicht von vorne auf eine Rollschranke, und
- Fig. 4: ein Detail der Rollschranke in vergrösserter Darstellung.

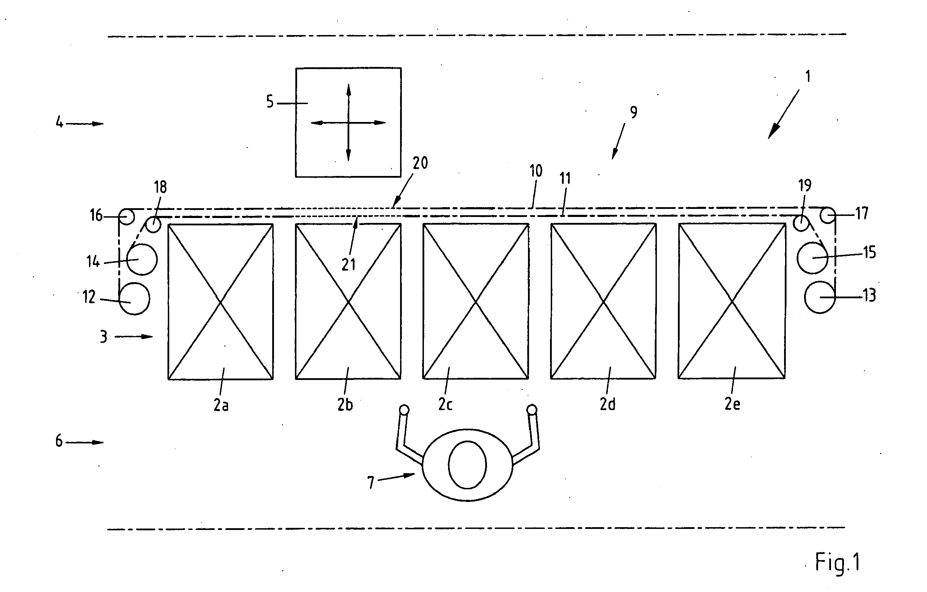

Anhand der Fig. 1, welche in schematischer Darstellung eine Draufsicht auf eine Kommissionieranlage zeigt, soll die prinzipielle Wirkungsweise der erfindungsgemässen Anordnung zum einseitigen Verschliessen von Lagerplätzen von Regallageranlagen erläutert werden.

Die Regallageranlage 1 weist eine Vielzahl von Lagerplätzen auf, wobei hier stellvertretend fünf Lagerplätze 2a, 2b, 2c, 2d, 2e eingezeichnet sind. Die Lagerplätze sind in Regalreihen 3 angeordnet, welche sich im allgemeinen vertikal über mehrere Ebenen erstrecken. Die Regallageranlage 1 ist als sogenannte Mann zur Ware Kommissionieranlage ausgebildet, bei der die Güter auf Paletten aufgenommen und in einem Lagerplatz 2a, 2b, 2c, 2d, 2e eingelagert sind. Unter dem Begriff Palette ist nicht zwingend eine Palette im herkömmlichen Sinn zu verstehen, sondern der Begriff Palette wird hier stellvertretend für alle Arten von Untersätzen wie beispielsweise Gitterboxen, Behälter, Tablare, Kassetten und dgl. verwendet. Im vorliegenden Fall wird davon ausgegangen, dass pro Lagerplatz 2a, 2b, 2c, 2d, 2e eine mit Gütern bestückte Palette aufgenommen werden kann.

Angrenzend an die eine Längsseite der Regalreihe 3 ist eine Gasse 4 angeordnet, in der ein schematisch dargestelltes Regalbediengerät 5 verfahrbar angeordnet ist. Das Regalbediengerät 5 dient dem vollautomatischen Ein- und Auslagern von Paletten bzw. von mit Gütern beladenen Paletten. Die Paletten werden dazu vom Regalbediengerät 5 von der Gasse 4 her in den vorgesehenen Lagerplatz 2a, 2b, 2c, 2d, 2e hineingeschoben bzw. daraus entnommen. Auf der anderen Längsseite der Regalreihe 3 verläuft ein Kommissioniergang 6, in dem sich Personen 7, sogenannte Kommissionierer, frei bewegen können, um Güter aus dem jeweiligen Lagerplatz 2a, 2b, 2c, 2d, 2e zu entnehmen und an ein nicht dargestelltes Weiterbeförderungsmittel wie beispielsweise ein Förderband oder ein in der Anlage verkehrendes Fahrzeug zu übergeben.

Zwischen der Regalreihe 3 und der Gasse 4, in der das Regalbediengerät 5 verfahrbar aufgenommen ist, ist die Anordnung 9 zum einseitigen Verschliessen der Lagerplätze 2a, 2b, 2c, 2d, 2e angeordnet. Die Anordnung 9 umfasst zwei Rollschranken 10, 11. Jede dieser Rollschranken 10, 11 besteht aus einem Flächengebilde, beispielsweise einer Textilbahn, die beidseitig an je einer Hauptrolle 12, 13; 14, 15 derart befestigt, dass sie darauf aufrollbar bzw. davon abrollbar ist. Neben den beiden Hauptrollen 12, 13; 14, 15 sind pro Rollschranke 10, 11 je zwei Umlenkrollen 16, 17; 18, 19 vorgesehen, welche sicherstellen, dass sich die jeweilige Rollschranke 10, 11 in Bezug auf die Regalreihe 3 immer in der gleichen Ebene bewegt, und zwar unabhängig von dem sich beim Auf- oder Abrollen verändernden Durchmesser der auf der jeweiligen Hauptrolle 12, 13; 14, 15 aufgewickelten Rollschranke 10, 11. Jede Rollschranke 10, 11 ist mit einer Öffnung 20, 21 versehen, welche derart dimensioniert ist, dass eine mit Gütern beladene Palette von dem Regalbediengerät 5 durch die Öffnung 20, 21 hindurchgeführt werden kann. Vorzugsweise ist die jeweilige Öffnung 20, 21 etwas breiter und höher als ein Lagerplatz 2a, 2b, 2c, 2d, 2e. Die Rollschranken 10, 11 sind derart bewegbar, dass die jeweilige Öffnung 20, 21 horizontal entlang der Lagerplätze 2a, 2b, 2c, 2d, 2e bewegt werden kann. Wenn die in der vorderen Rollschranke 10 angeordnete Öffnung 20 mit der in der hinteren Rollschranke 11 angeordneten Öffnung 21 deckungsgleich und mit einem Lagerplatz 2b fluchtend angeordnet ist, kann eine Palette mittels des Regalbediengeräts 5 in den entsprechenden Lagerplatz 2b ein- bzw. ausgelagert werden. Der Verfahrensablauf zum Bewegen der jeweiligen Rollschranke 10, 11 beim Ein- und Auslagern von Gütern wird nachfolgend noch näher erläutert.

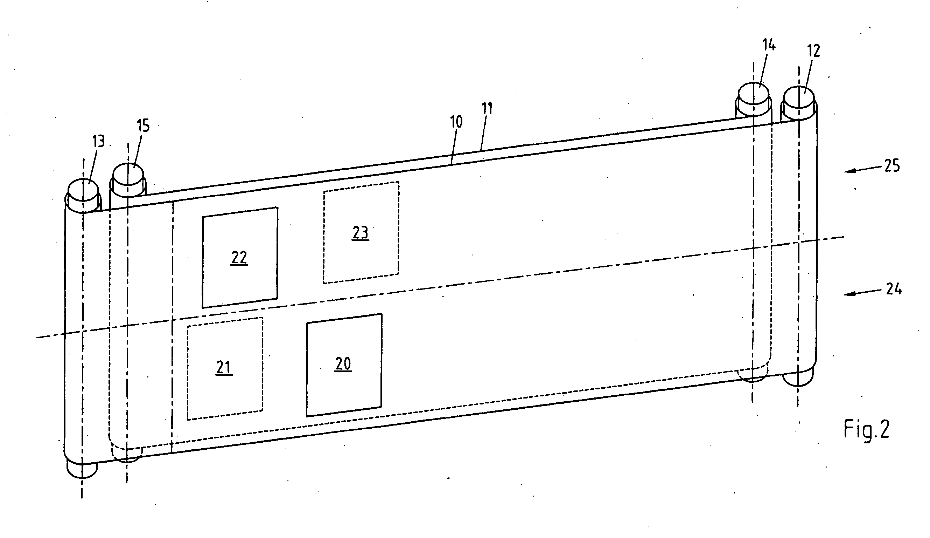

Die Fig. 2 zeigt wiederum schematisch die beiden hintereinander angeordneten Rollschranken 10, 11 in einer Ansicht von vorne, d.h. aus der Gasse heraus, in der ein Regalbediengerät verfahrbar angeordnet ist. Aus dieser Darstellung ist ersichtlich, dass jede Rollschranke 10, 11 mit je zwei Öffnungen 20, 22; 21, 23 versehen ist, welche sowohl horizontal wie auch vertikal zueinander versetzt sind. Die Rollschranke 10, 11 erstreckt sich im vorliegenden Beispiel in vertikaler Richtung über zwei Lagerebenen 24, 25 hinweg, wobei jeweils die untere Öffnung 20, 21 mit der unteren Lagerebene 24 fluchtet, während die obere Öffnung 22, 23 jeweils mit der oberen Lagerebene 25 fluchtet. In dem hier dargestellten Ruhezustand sind beiden in der vorderen Rollschranke 10 angeordneten Öffnungen 20, 22 versetzt zu den beiden in der hinteren Rollschranke 11, angeordneten Öffnungen 21, 23. Damit sind sämtliche von den Rollschranken 10, 11 überdeckten Lagerkanäle einseitig, d.h. gegenüber der Gasse abgetrennt. Soll nun eine Palette mittels des Regalbediengeräts aus einem bestimmten Lagerkanal aus der unteren Lagerebene 24 entnommen bzw. in einen bestimmten Lagerkanal in der unteren Lagerebene 24 eingelagert werden, so wird die eine Rollschranke, vorzugsweise die dem Lagerkanal zugewandte hintere Rollschranke 11, derart bewegt, dass deren untere Öffnung 21 mit dem entsprechenden Lagerkanal fluchtet. Gleichzeitig bewegt sich das Regalbediengerät zu dem entsprechenden Lagerkanal hin. Sobald sich das Regalbediengerät bis auf einen vorbestimmten räumlichen oder zeitlichen Abstand dem Lagerkanal angenähert hat, wird die vordere, der Gasse zugewandte Rollschranke 10 derart bewegt, dass deren untere Öffnung 20 mit dem entsprechenden Lagerkanal, und damit natürlich auch mit der Öffnung 21 in der hinteren Rollschranke 11, fluchtet. Das Timing beim Verfahren der vorderen Rollschranke 10 wird vorzugsweise so gewählt, dass das Regalbediengerät in etwa zeitgleich mit der Öffnung 20 in der vorderen Rollschranke 10 vor dem angewählten Lagerkanal zur Ruhe kommt. Das bedeutet, dass wenn die beiden Öffnungen 20, 21 in den beiden Rollschranken 10, 11 vor dem entsprechenden Lagerkanal angekommen sind und mit diesem fluchten, sich auf der der Gasse zugewandten Seite des Lagerkanals gleichzeitig auch das Regalbediengerät befindet.

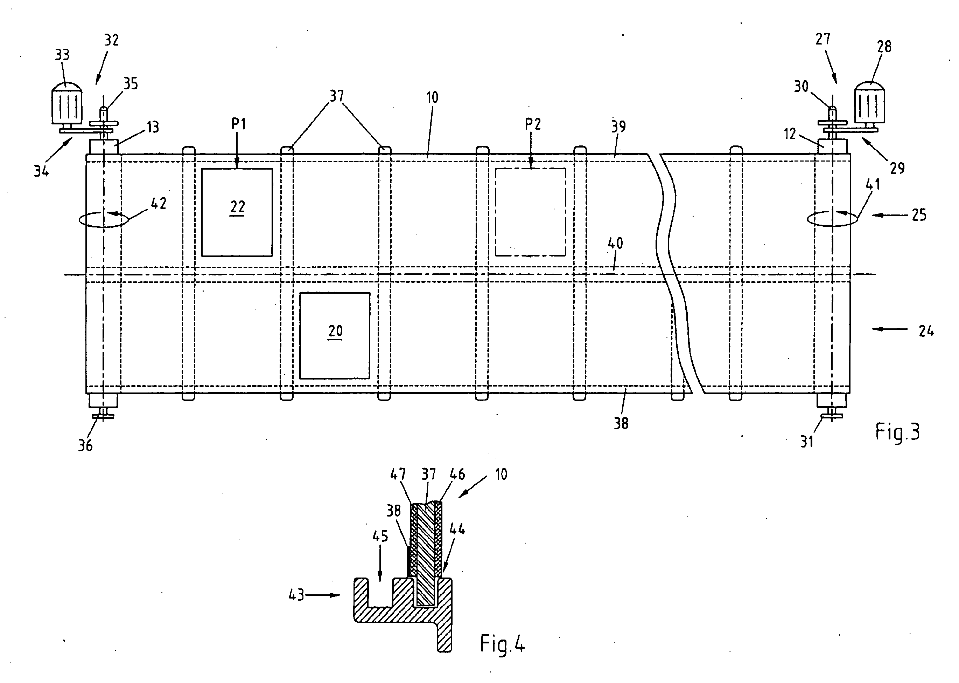

Die Fig. 3 zeigt eine Ansicht von vorne auf die vordere der beiden Rollschranken 10, wobei diese wiederum schematisch dargestellt ist und die beiden Umlenkrollen nicht eingezeichnet sind. Wie ersichtlich, ist beiden Hauptrollen 12, 13 je eine Antriebsvorrichtung 27, 32 zugeordnet, die jeweils aus einem Antriebsmotor 28, 33 einem Getriebe 29, 34 sowie einer Freilaufnabe 30, 35 besteht. Die jeweilige Hauptrolle 10, 11 ist über das Getriebe 29, 34 mit dem zugeordneten Antriebsmotor 28, 33 verbunden und von diesem in eine Richtung, namentlich in Aufrollrichtung, antreibbar. Die Freilaufnabe 30, 35 dient dazu, die jeweilige Hauptrolle 12, 13 vom Motor 28, 33 abzukoppeln, wenn die Rollschranke vom gegenüberliegenden Motor angetrieben wird. Soll beispielsweise die obere Öffnung 22 in der Rollschranke 10 von der dargestellten Position P1 in die durch unterbrochene Linien angedeutete Position P2 nach rechts verfahren werden, so wird der rechte Antriebsmotor 28 aktiviert, wodurch sich die rechte Hauptrolle 12, wie durch einen Pfeil 41 angedeutet, im Gegenuhrzeigersinn zu drehen beginnt und die Rollschranke 10 auf die rechte Hauptrolle 12 aufgerollt wird. Der linke Antriebsmotor 33 ist durch die Freilaufnabe 35 von der linken Hautrolle 13 abgekoppelt, so dass die linke Hauptrolle 13 im Gegenuhrzeigersinn, wie durch einen Pfeil 42 angedeutet, frei mitdrehen kann und sich die Rollschranke davon abwickelt. Auf der Unterseite ist die jeweilige Hauptrolle 10, 11 ebenfalls drehbar in einer Lagerung 31, 36 aufgenommen.

Im weiteren ist ersichtlich, dass die Rollschranke 10 in regelmässigen Abständen mit vertikal verlaufenden Streben 37 versehen ist, welche sowohl auf der Ober- wie auch Unterseite über die Rollschranke 10 vorstehen. Diese Streben 37 dienen dem Führen und Positionieren der Rollschranke 10 entlang der Lagerkanäle bzw. Regalreihen, indem sie in entsprechenden Führungsschienen (nicht dargestellt) aufgenommen sind. Auf der Unter- und Oberseite ist die Rollschranke 10 vorzugsweise mit Zugbändern 38, 39 versehen, welche die Masshaltigkeit der Rollschranke 10 in Längsrichtung über einen langen Zeitraum sicherstellen sollen.

Ggf. kann die Rollschranke 10 zusätzlich mit einem mittleren Zugband 40 versehen werden. Die Rollschranke kann aus verschiedensten Materialien wie beispielsweise einem Textilgewebe, einem Kunststoffgewebe oder einer Kunststofffolie hergestellt werden. Die vertikalen Streben 37 können beispielsweise aus Metall oder Kunststoff hergestellt werden. Die Zugbänder 38, 39, 40 schliesslich sind vorzugsweise aus einem Material gefertigt, welches robust und praktisch nicht dehnbar ist, damit die Masshaltigkeit der Rollschranke 10 in Längsrichtung über einen langen Zeitraum erhalten bleibt. Als Beispiel hierfür seien Polyestergewebe, kohle- oder aramidfaserverstärkte Kunststoffe "Kevlar" erwähnt. Die jeweilige Rollschranke kann sich durchaus über eine Breite von ca. 20 bis 30 Metern und eine Höhe von ca. 2 bis 10 Metern erstrecken.

Die Fig. 4 schliesslich zeigt ein Detail der Rollschranke 10 in vergrösserter Darstellung. Namentlich ist ein Querschnitt durch das untere Ende einer Rollschranke 10 sowie durch eine mit zwei Nuten 44, 45 versehene Führungsschiene 43 ersichtlich, wobei die eine Nut 44 der Führung der vorderen Rollschranke 10 dient, während die anderen Nut 45 der Führung der hinteren Rollschranke (nicht dargestellt) dient. Wie ersichtlich, sind die vertikalen Streben 37 der Rollschranke 10 zwischen zwei Lagen 46, 47 der Rollschranke 10 aufgenommen. Auf der Rückseite der Rollschranke 10 ist zudem das untere Zugband 38 ersichtlich.

Das jeweilige Ende der vertikalen Streben 37 ist mit geringem Spiel in der jeweiligen Nut 44 der Führungsschiene 43 aufgenommen. Während die Führungsschiene 43 vorzugsweise aus einem Metallprofil, beispielsweise aus Aluminium gefertigt ist, können die vertikalen Streben 37 aus einem Kunststoff mit guten Gleiteigenschaften gefertigt werden. Natürlich können die vertikalen Streben 37 endseitig auch mit Gleitrollen (nicht dargestellt) versehen werden, welche in der jeweiligen Nut der Führungsschiene 43 aufgenommen und geführt werden. Oberhalb der Rollschranke(n) ist ein identisches Profil angeordnet, welches der Führung der Rollschranke(n) auf der Oberseite dient. Durch die in Führungsschienen geführten Streben 37 wird zudem die Stabilität der Rollschranke 10 erhöht und sichergestellt, dass sie relativ hohe Querkräfte aufnehmen kann und den jeweiligen Lagerkanal zuverlässig und sicher gegenüber der Gasse abtrennt.

Eine derartige Anordnung zum einseitigen Abtrennen von Lagerplätzen ist sehr einfach aufgebaut, garantiert eine zuverlässige Funktionsweise, ist universell einsetzbar, besteht aus vergleichsweise wenigen Teilen, lässt sich kostengünstig fertigen und braucht wenig Platz. Zudem kann die Ein- und Auslagerzeit für Güter im Vergleich zu herkömmlichen Sicherheitsabschrankungen massiv verkürzt werden, da die jeweilige Rollschranke unabhängig vom Regalbediengerät bewegt werden kann. Schliesslich bieten die Rollschranken auch eine hohe Sicherheit, indem sie den jeweiligen Lagerkanal vollflächig abtrennen, so dass beispielsweise keine Körperteile oder Gliedmassen in die Gasse hineingestreckt werden können.

## Patentansprüche

1. Anordnung (9) zum einseitigen Abtrennen von Lagerplätzen (2a, 2b, 2c, 2d, 2e) in Regallageranlagen (1), insbesondere Kommissionieranlagen, **dadurch gekennzeichnet, dass** die Anordnung (9) zumindest ein mit zumindest einer Öffnung (20, 21) versehenes, aufrollbares Flächengebilde in Form einer Rollschranke (10, 11) aufweist, weiche sich entlang von Lagerplätzen (2a, 2b, 2c, 2d, 2e) erstreckt, wobei die Rollschranke (10, 11) derart bewegbar ist, dass die Öffnung (20, 21) horizontal entlang der Lagerplätze (2a, 2b, 2c, 2d, 2e) verfahrbar ist, und wobei die Öffnung (20, 21) derart dimensioniert ist, dass eine mit Gütern beladene Palette durch sie hindurchgeführt werden kann.

2. Anordnung (9) nach Anspruch 1, **dadurch gekennzeichnet, dass** die Rollschranke (10, 11) beidseitig an je einer Hauptrolle (12, 13, 14, 15) befestigt und auf diese aufrollbar bzw. von dieser abrollbar ist.

3. Anordnung (9) nach Anspruch 2, **dadurch gekennzeichnet, dass** beide Hauptrollen (12, 13) einer Rollschranke (10) mit einem Antrieb (28, 33) koppelbar sind, wobei zum Verschieben der Rollschranke (10) diejenige Hauptrolle (12, 13) aktiv angetrieben wird, auf die die Rollschranke (10) aufgerollt wird, während diejenige Hauptrolle (12, 13), von der die Rollschranke (10) abgerollt wird, von dem Antrieb (28, 33) abgekoppelt ist und frei mitläuft.

4. Anordnung (9) nach einem der vorhergehenden Ansprüche, **dadurch gekennzeichnet, dass** die Anordnung (9) zwei hintereinander angeordnete Rollschranken (10, 11) umfasst, wobei jede Rollschranke (10, 11) mit zumindest einer Öffnung (21, 22, 23, 24) versehen ist, und wobei die Rollschranken (10, 11) derart bewegbar sind, dass die Öffnung (20, 22) in der einen Rollschranke (10) mit zumindest einer Öffnung (21, 23) in der anderen Rollschranke (11) in Übereinstimmung gebracht werden kann.

5. Anordnung (9) nach Anspruch 4, **dadurch gekennzeichnet, dass** die beiden Rollschranken (10, 11) unabhängig voneinander bewegbar sind.

6. Anordnung (9) nach einem der vorhergehenden Ansprüche, **dadurch gekennzeichnet, dass** die jeweilige Rollschranke (10, 11) eine derartige Höhe besitzt, dass sie sich in vertikaler Richtung über mehrere Lagerebenen (24, 25) erstreckt, wobei die jeweilige Rollschranke (10, 11) pro Lagerebene (24, 25) mit zumindest einer Öffnung (20, 22, 21, 23) versehen ist.

7. Anordnung (9) nach Anspruch 1, **dadurch gekennzeichnet, dass** die Anordnung zwei hintereinander angeordnete Rollschranken (10, 11) umfasst, wobei jede Rollschranke (10, 11) eine derartige Höhe besitzt, dass sie sich in vertikaler Richtung über zumindest eine Lagerebene (24, 25) erstreckt, und wobei die jeweilige Rollschranke (10) pro Lagerebene (24, 25) mit zumindest einer Öffnung (20, 22) versehen ist, die mit der in der gleichen Ebene angeordneten Öffnung (21, 23) in der anderen Rollschranke (11) in Übereinstimmung gebracht werden kann, und wobei die beiden Rollschranken (10, 11) unabhängig voneinander bewegbar sind.

8. Anordnung (9) nach Anspruch 7, **dadurch gekennzeichnet, dass** sich die Rollschranken (10, 11) in vertikaler Richtung über zumindest zwei Lagerebenen (24, 25) erstrecken, wobei die in unterschiedlichen Ebenen (24, 25) angeordneten Öffnungen (20, 22, 21, 23) in der jeweiligen Rollschranke (10, 11) in horizontaler Richtung um mindestens die Breite eines Lagerplatzes zueinander versetzt sind.

9. Anordnung (9) nach einem der vorhergehenden Ansprüche, **dadurch gekennzeichnet, dass** oberhalb und unterhalb der jeweiligen Rollschranke (10, 11) Führungsschienen angeordnet sind, in welche an der Rollschranke (10, 11) angeordnete Führungsmittel (37) eingreifen, um die Rollschranke (10, 11) entlang der Lagerkanäle zu Führen und zu Positionieren.

10. Anordnung (9) nach einem der vorhergehenden Ansprüche, **dadurch gekennzeichnet, dass** die Rollschranke (10) aus einem textilen Flächengebilde, einem Textil- oder Kunststoffgewebe oder einer Kunststofffolie besteht, welches bzw. welche mittels in Längsrichtung verlaufenden Bändern (38, 39, 40) verstärkt ist, die eine hohe Zugfestigkeit und Masshaltigkeit aufweisen.

11. Regallageranlage (1), insbesondere Kommissionieranlage, mit einer Vielzahl von Lagerplätzen (2a, 2b, 2c, 2d, 2e) und zumindest einer an die Lagerplätze (2a, 2b, 2c, 2d, 2e) angrenzenden Gasse (4), in der ein Regalbediengerät (5) verfahrbar aufgenommen ist, **dadurch gekennzeichnet, dass** die Regallageranlage (1) zum Abtrennen der Lagerplätze (2a, 2b, 2c, 2d, 2e) gegenüber der Gasse (4) mit einer nach einem der Ansprüche 1 bis 9 ausgebildeten Anordnung (9) versehen ist.

12. Regallageranlage (1) nach Anspruch 11, **dadurch gekennzeichnet, dass** die Regallageranlage (1) zumindest zwei vertikal übereinander angeordnete Kommissionierebenen (24, 25) aufweist, in welchen sich Personen bewegen können, und dass die Anordnung (9) mit zumindest einer Rollschranke (10) versehen ist, welche sich in vertikaler Richtung über sämtliche Kommissionierebenen erstreckt.

## Claims

1. An assembly (9) for one-sided separation of storage bays (2a, 2b, 2c, 2d, 2e) in high bay storage facilities (1), in particular picking facilities, **characterized in that** the assembly (9) comprises at least one roll-up screen in the form of a rolling barrier (10) provided with at least one aperture (20, 21), the rolling barrier (10) extending along the storage bays (2a, 2b, 2c, 2d, 2e) and movable such that the aperture (20, 21) is devised to travel horizontally along the storage bays (2a, 2b, 2c, 2d, 2e) and is dimensioned such that a pallet loaded with merchandise can be passed through.

2. The assembly (9) as set forth in claim 1, **characterized in that** the rolling barrier (10, 11) is secured at both ends to a main roller (12, 13, 14, 15) for rolling up/out thereon.

3. The assembly (9) as set forth in claim 2, **characterized in that** both main rollers (12, 13) of a rolling barrier (10) are devised for coupling to a drive (28, 33), shifting the rolling barrier (10) requiring the main roller (12, 13) to be actively powered on which the rolling barrier (10) is rolled up whilst the main roller (12, 13) from which the rolling barrier (10) is rolled out is decoupled from the drive (28, 33) and is entrained free to roll.

4. The assembly (9) as set forth in any of the preceding claims, **characterized in that** the assembly (9) comprises two rolling barriers (10, 11) one behind the other, each rolling barrier (10, 11) being provided with at least one aperture (20, 21, 22, 23), and the rolling barriers (10, 11) being movable such that the aperture (20, 22) in the one rolling barrier (10) can be positioned to agree with at least one aperture (21, 23) in the other rolling barrier (11).

5. The assembly (9) as set forth in claim 4, **characterized in that** each rolling barrier (10, 11) is movable independently of the other.

6. The assembly (9) as set forth in any of the preceding claims, **characterized in that** each rolling barrier (10, 11) is devised high enough to cover several storage levels (24, 25) vertically, each rolling barrier (10, 11) being provided with at least one aperture (20, 22, 21, 23) per storage level (24, 25).

7. The assembly (9) as set forth in claim 1, **characterized in that** the assembly (9) comprises two rolling barriers (10, 11) arranged one behind the other, each rolling barrier (10, 11) being devised high enough to cover at least one storage level (24, 25) vertically, and each rolling barrier (10) being provided with at least one aperture (20, 22) per storage level (24, 25) which can be positioned to agree with at least one aperture (21, 23) in the other rolling barrier (11), and both rolling barriers (10, 11) being movable independently of each other.

8. The assembly (9) as set forth in claim 7, **characterized in that** the rolling barriers (10, 11) extend vertically over at least two storage levels (24, 25), the apertures (20, 22, 21, 23) arranged at differing levels (24, 25) in each rolling barrier (10) being staggered horizontally by at least the width of a storage bay.

9. The assembly (9) as set forth in any of the preceding claims, **characterized in that** arranged above and below each rolling barrier (10, 11) are tracks engaging guide means (37) arranged on the rolling barrier (10, 11) for guiding and positioning the rolling barriers (10) along the storage channels.

10. The assembly (9) as set forth in any of the preceding claims, **characterized in that** the rolling barrier (10) is made of a textile sheeting, a textile or plastics fabric or a plastics film reinforced by longitudinal tapes (38, 39, 40) featuring high tensile strength and dimensional stability.

11. A high bay storage facility (1), particular a picking facility comprising a plurality of storage bays (2a, 2b, 2c, 2d, 2e) and at least one aisle (4) bordering the storage bays (2a, 2b, 2c, 2d, 2e) in which a storage/retrieval machine (5) travels, **characterized in that** the high bay storage facility (1) is provided with an assembly (9) configured as set forth in any of the claims 1 to 9 for separation of storage bays (2a, 2b, 2c, 2d, 2e) relative to the aisle (4).

12. The high bay storage facility (1) as set forth in claim 11, **characterized in that** the high bay storage facility (1) comprises at least two picking levels (24, 25) stacked vertically one above the other for personnel access and that the assembly (9) is provided with at least one rolling barrier (10) extending vertically over all picking levels.

## Revendications

1. Agencement (9) destiné à la séparation unilatérale d'aires de stockage (2a, 2b, 2c, 2d, 2e) dans des installations de stockage à rayonnages (1), en particulier dans des installations de préparation, **caractérisé en ce que** l'agencement (9) présente au moins une structure plane enroulable, pourvue d'au moins une ouverture (20, 21) sous forme d'une barrière roulante (10, 11) qui s'étend le long d'aires de stockage (2a, 2b, 2c, 2d, 2e), la barrière roulante (10, 11) pouvant être déplacée de telle sorte que l'ouverture (20, 21) puisse être déplacée horizontalement le long des aires de stockage (2a, 2b, 2c, 2d, 2e), et l'ouverture (20, 21) étant dimensionnée de telle sorte qu'une palette chargée de marchandises puisse passer au travers de celle-ci.

2. Agencement (9) selon la revendication 1, **caractérisé en ce que** la barrière roulante (10, 11) est fixée des deux côtés sur un rouleau principal (12, 13, 14, 15) et peut s'enrouler sur celui-ci ou se dérouler de celui-ci.

3. Agencement (9) selon la revendication 2, **caractérisé en ce que** les deux rouleaux principaux (12, 13) d'une barrière roulante (10) peuvent être couplés à un entraînement (28, 33), le rouleau principal (12, 13), sur lequel la barrière roulante (10) est enroulée, étant entraîné activement pour déplacer la barrière roulante (10), alors que le rouleau principal (12, 13), duquel la barrière roulante (10) est déroulée, est désaccouplé de l'entraînement (28, 33) et est à fonctionnement couplé librement.

4. Agencement (9) selon l'une quelconque des revendications précédentes, **caractérisé en ce que** l'agencement (9) comprend deux barrières roulantes (10, 11) disposées l'une derrière l'autre, chaque barrière roulante (10, 11) étant pourvue au moins d'une ouverture (20, 21, 22, 23), et les barrières roulantes (10, 11) pouvant être déplacées de telle sorte que l'ouverture (20, 22) puisse être amenée en concordance avec au moins une ouverture (21, 23) dans l'autre barrière roulante (11).

5. Agencement (9) selon la revendication 4, **caractérisé en ce que** les deux barrières roulantes (10, 11) peuvent être déplacées indépendamment l'une de l'autre.

6. Agencement (9) selon l'une quelconque des revendications précédentes, **caractérisé en ce que** la barrière roulante (10, 11) respective possède une telle hauteur qu'elle s'étend dans le sens vertical sur plusieurs plans de stockage (24, 25), la barrière roulante (10, 11) respective étant pourvue par plan de stockage (24, 25) d'au moins une ouverture (20, 22, 21, 23).

7. Agencement (9) selon la revendication 1, **caractérisé en ce que** l'agencement comprend deux barrières roulantes (10, 11) disposées l'une derrière l'autre, chaque barrière roulante (10, 11) possédant une telle hauteur qu'elle s'étend dans le sens vertical sur au moins un plan de stockage (24, 25), et la barrière roulante (10) respective étant pourvue par plan de stockage (24, 25) d'au moins une ouverture (20, 22) qui peut être amenée en concordance avec l'ouverture (21, 23) disposée dans le même plan dans l'autre barrière roulante (11), et les deux barrières roulantes (10, 11) pouvant être déplacées indépendamment l'une de l'autre.

8. Agencement (9) selon la revendication 7, **caractérisé en ce que** les barrières roulantes (10, 11) s'étendent dans le sens vertical sur au moins deux plans de stockage (24, 25), les ouvertures (20, 22, 21, 23) disposées dans différents plans (24, 25) étant décalées les unes par rapport aux autres dans la barrière roulante (10, 11) respective dans le sens horizontal d'au moins la largeur d'une aire de stockage.

9. Agencement (9) selon l'une quelconque des revendications précédentes, **caractérisé en ce qu'**au-dessus et au-dessous de la barrière roulante (10, 11) respective sont disposés des rails de guidage, dans lesquels s'engagent des moyens de guidage (37 disposés sur la barrière roulante (10, 11) afin de guider et de positionner la barrière roulante (10, 11) le long des canaux de stockage.

10. Agencement (9) selon l'une quelconque des revendications précédentes, **caractérisé en ce** la barrière roulante (10) se compose d'une structure plane textile, d'un tissu textile ou synthétique ou d'un film plastique qui est renforcé au moyen de bandes (38, 39, 40) s'étendant dans le sens longitudinal, qui présentent une résistance à la traction et une précision dimensionnelle élevées.

11. Installation de stockage à rayonnages (1), en particulier installation de préparation, avec une pluralité d'aires de stockage (2a, 2b, 2c, 2d, 2e) et au moins une voie (4) contiguë aux aires de stockage (2a, 2b, 2c, 2d, 2e), dans laquelle un transstockeur (5) est logé de manière mobile, **caractérisée en ce que** l'installation de stockage à rayonnages (1) est pourvue pour la séparation des aires de stockage (2a, 2b, 2c, 2d, 2e) par rapport à la voie (4) d'un agencement (9) réalisé selon l'une quelconque des revendications 1 à 9.

12. Installation de stockage à rayonnages (1) selon la revendication 11, **caractérisée en ce que** l'installation de stockage à rayonnages (1) présente au moins deux plans de préparation (24, 25) disposés verticalement l'un au-dessus de l'autre, dans lesquels peuvent se déplacer des personnes, et **en ce que** l'agencement (9) est pourvu d'au moins une barrière roulante (10) qui s'étend dans le sens vertical sur tous les plans de préparation.
